# EUROPÄISCHE PATENTANMELDUNG

(11) **EP 4 613 985 A1**
(43) Veröffentlichungstag der Anmeldung: **10.09.2025**
(21) Anmeldenummer: 25150253.0
(22) Anmeldetag: 03.01.2025
(51) Int. Cl.: F01N 3/20

(54) **REDUKTIONSMITTELEINSPRITZDÜSE UND REDUKTIONSMITTELDOSIERSYSTEM**

(30) Priorität: 08.03.2024 DE 102024000782
(71) Anmelder: Albonair GmbH, 44263 Dortmund (DE)
(72) Erfinder: Rötzheim, Rainer, 53123 Bonn (DE); Beckmann, Björn, 44309 Dortmund (DE)
(74) Vertreter: Patentanwaltskanzlei Methling

(57) **Zusammenfassung**

Die Erfindung betrifft eine Reduktionsmitteleinspritzdüse (400) zur Einspritzung eines Reduktionsmittels in den Abgasstrom eines Verbrennungsmotors zur selektiven katalytischen Reduktion, aufweisend einen Düsenkörper, innerhalb dessen Strömungskanäle (6, 7) ausgebildet sind, durch die das zur Reduktionsmitteleinspritzdüse geförderte Reduktionsmittel von einem Anschlusskanal der Reduktionsmitteleinspritzdüse zu einem Düsenaustritt (1) geleitet wird, wobei stromauf des Düsenaustrittes (1) eine sich in Richtung auf den Düsenaustritt (1) verjüngende Drallkammer (2) ausgebildet ist. Ferner betrifft die Erfindung ein Reduktionsmitteldosiersystem zur Einspritzung eines Reduktionsmittels in den Abgasstrom eines Verbrennungsmotors zur selektiven katalytischen Reduktion.

## Beschreibung

Die Erfindung betrifft eine Reduktionsmitteleinspritzdüse zur Einspritzung eines Reduktionsmittels in den Abgasstrom eines Verbrennungsmotors zur selektiven katalytischen Reduktion, aufweisend einen Düsenkörper, innerhalb dessen Strömungskanäle ausgebildet sind, durch die das zur Reduktionsmitteleinspritzdüse geförderte Reduktionsmittel von einem Anschlusskanal der Reduktionsmitteleinspritzdüse zu einem Düsenaustritt geleitet wird.

Ferner betrifft die Erfindung ein Reduktionsmitteldosiersystem zur Einspritzung eines Reduktionsmittels in den Abgasstrom eines Verbrennungsmotors zur selektiven katalytischen Reduktion, mit zumindest einer Dosierpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird.

Derartige Düsen und Systeme sind aus dem Stand der Technik bekannt. Üblicherweise kommt dabei eine ventilgesteuerte Düse zum Einsatz. Die bekannten Systeme arbeiten mit Ringleitungen, Kreiselpumpen und ventilgesteuerten Düsen, um den Versorgungsdruck in der Leitung aufrechtzuerhalten und befinden sich somit in einem geschlossenen Drucksystem, aus dem sich im Anforderungsfall über das Öffnen und Schließen der ventilgesteuerten Düse ein entsprechendes Spraybild des Reduktionsmittels erzielen lässt. Dabei wird das Überhitzen der Düse und deren elektronischer Komponenten mittels Umspülung der Hochtemperaturbereiche mittels Reduktionsmittel und Rückführung in eine Ringleitung verhindert. Ferner sind Düsen bekannt, die mit einem aktiven Kühlmantel umgeben sind, der mittels eines Kühlmediums aus dem Kühlmittelkreislauf eines Verbrennungsmotors gekühlt wird. Alle bekannten Düsen und Systeme sind durch ihren Anteil an elektronischen Bauteilen, die permanenten Druckverhältnisse im System und den daraus folgenden Verschleiß anfällig und kostenintensiv.

Katalysatoren zur selektiven katalytischen Reduktion (englisch: selective catalyic reduction, abgekürzt: SCR), sogenannte SCR-Katalysatoren, werden eingesetzt, um die Stickoxydemission von Dieselmotoren, Feuerungsanlagen, Müllverbrennungsanlagen, Industrieanlagen und dergleichen zu vermindern. Hierzu wird ein Reduktionsmittel mit einer Dosiervorrichtung in das Abgassystem eingedüst. Als Reduktionsmittel dient Ammoniak oder eine Ammoniaklösung oder ein anderes Reduktionsmittel.

Da das Mitführen von Ammoniak in Fahrzeugen sicherheitskritisch ist, wird Harnstoff in wässriger Lösung mit üblicherweise 32,5 % Harnstoffanteil, insbesondere gemäß DIN 70070, eingesetzt. Im Abgas zersetzt sich der Harnstoff bei Temperaturen oberhalb von 150° Celsius in gasförmiges Ammoniak und CO₂. Parameter für die Zersetzung des Harnstoffes sind im Wesentlichen Zeit (Verdampfungs- und Reaktionszeit), Temperatur und Tröpfchengröße der eingedüsten Harnstofflösung. In diesen SCR-Katalysatoren wird durch selektive katalytische Reduktion der Ausstoß von Stickoxyden um etwa 90 % reduziert.

Mit dem Begriff der Reduktionsmittellösung oder des Reduktionsmittels ist jedes zur selektiven katalytischen Reduktion geeignete Reduktionsmittel umfasst, vorzugsweise kommt hierzu eine Harnstofflösung gemäß DIN 70070 zum Einsatz. Die Erfindung ist jedoch nicht hierauf beschränkt. Die Begriffe Reduktionsmitteldosiersystem bzw. Dosiersystem werden im Sinne der Erfindung synonym verwendet. Die Begriffe Düse und Einspritzdüse bzw. Reduktionsmitteleinspritzdüse werden ebenfalls synonym verwendet.

Nach der Einspritzung des Harnstoffs in wässriger Lösung in den Abgasstrang muss für die SCR-Reaktion zunächst Ammoniak (NH₃) gebildet werden. Hierbei wird das reduzierend wirkende Ammoniak durch die thermische Zersetzung von Harnstoff (Thermolyse) und die Hydrolyse der entstehenden Isocyansäure freigesetzt.

In der ersten Reaktion, der Thermolyse, wird durch den Einfluss der Temperatur Harnstoff in Ammoniak (NH₃) und Isocyansäure (HNCO) umgewandelt. Im zweiten Schritt folgt unter Anwesenheit von Wasser die Hydrolyse, in der die Isocyansäure ebenfalls in Ammoniak unter Bildung von Kohlendioxid (CO₂) umgewandelt wird.

Einen erheblichen Einfluss auf die Reaktionsqualität der selektiven katalytischen Reduktion hat das Spraybild des eingespritzten Reduktionsmittels.

Die Aufgabe der Erfindung ist es daher, eine Einspritzdüse für ein Reduktionsmitteldosiersystem derart weiterzubilden, dass bei einer möglichst geringen Komplexität und hoher Robustheit der Düse ein gutes Spraybild des eingespritzten Reduktionsmittels erzeugt wird. Ferner soll die Düsengeometrie derart gestaltet sein, dass ein Verblocken der Düse durch eine Austrocknung und Kristallisation des Reduktionsmittels verhindert wird.

Diese Aufgabe wird erfindungsgemäß durch eine Einspritzdüse gemäß Anspruch 1 und ein Reduktionsmitteldosiersystem gemäß Anspruch 15 gelöst. Vorteilhafte Weiterbildungen der Erfindung sind in den abhängigen Ansprüchen angegeben.

Besonders vorteilhaft bei der Reduktionsmitteleinspritzdüse zur Einspritzung eines Reduktionsmittels in den Abgasstrom eines Verbrennungsmotors zur selektiven katalytischen Reduktion, aufweisend einen Düsenkörper, innerhalb dessen Strömungskanäle ausgebildet sind, durch die das zur Reduktionsmitteleinspritzdüse geförderte Reduktionsmittel von einem Anschlusskanal der Reduktionsmitteleinspritzdüse zu einem Düsenaustritt geleitet wird, ist es, dass stromauf des Düsenaustrittes eine sich in Richtung auf den Düsenaustritt verjüngende Drallkammer ausgebildet ist.

Durch die Ausbildung einer sich in Richtung auf den Düsenaustritt verjüngenden Drallkammer wird das geförderte Fluid beschleunigt. Dadurch wird ein Spraybild von hoher Qualität erzeugt.

Vorzugsweise ist die Drallkammer rotationssymmetrisch innerhalb der Düse ausgebildet.

Bevorzugt ist die Drallkammer zwischen einer Kegelspitze am Boden der Drallkammer und einer kegelförmigen Ausnehmung an der Oberseite der Drallkammer ausgebildet.

Die Verjüngung kann insbesondere dadurch erzeugt werden, dass der Kegelwinkel der Kegelspitze am Boden der Drallkammer kleiner ist als der Kegelwinkel der kegelförmigen Ausnehmung an der Oberseite der Drallkammer.

Vorzugsweise weist die Reduktionsmitteleinspritzdüse zur Einleitung des Reduktionsmittels in die Drallkammer zumindest einen, insbesondere zwei über dem Umfang der Drallkammer versetzt angeordnete, tangential in die Drallkammer mündende/n Einleitkanal/Einleitkanäle auf.

Diese Einleitkanäle sind derart ausgestaltet, dass sie tangential in die kegelförmige Geometrie der Drallkammer münden, sodass sich das eingeleitete Medium in einer Kreisbahn zur einer den Düsenaustritt bildenden Austrittsbohrung der Düse stetig verjüngend bewegt.

Bevorzugt ist stromauf der Drallkammer eine Diffusorkammer angeordnet, die mittelbar oder unmittelbar mit dem Anschlusskanal der Reduktionsmitteleinspritzdüse verbunden ist, insbesondere dass ausgehend von dem Anschlusskanal der Reduktionsmitteleinspritzdüse ein oder mehrere Umleitkanäle angeordnet sind, die in die Diffusorkammer münden.

Ausgehend vom Anschlusskanal der Reduktionsmitteleinspritzdüse wird dabei das geförderte Medium über einen oder mehrere Umleitkanäle in die Diffusorkammer eingeleitet, aus welcher das Medium über einen oder mehrere Einleitkanäle weiter in die stromab folgende Drallkammer eingeleitet wird.

Vorzugsweise ist stromauf der Drallkammer eine Diffusorkammer angeordnet, wobei die Diffusorkammer durch einen rotationssymmetrischen Ringspalt zwischen einem inneren Düsenkörper und einem äußeren Düsenkörper ausgebildet ist.

Insbesondere kann somit der Düsenkörper durch einen inneren Düsenkörper und einen äußeren Düsenkörper gebildet sein, wobei die Strömungskanäle und Kammern insbesondere zwischen dem inneren Düsenkörper und dem äußeren Düsenkörper durch eine entsprechende Ausgestaltung der Geometrie des inneren Düsenkörpers und des äußeren Düsenkörpers gebildet sind.

Bevorzugt ist stromauf der Drallkammer eine Diffusorkammer angeordnet, wobei die Drallkammer strömungstechnisch über zumindest einen Einleitkanal mit der Diffusorkammer verbunden ist, insbesondere über einen oder mehrere tangential in die Drallkammer mündende/n Einleitkanal/Einleitkanäle.

Vorzugsweise mündet die Drallkammer in den Düsenaustritt, wobei der Düsenaustritt durch eine zylindrische Bohrung gebildet ist. Dabei bestimmen der Durchmesser und die Länge der zylindrischen Bohrung das Spraybild, d.h. den Öffnungswinkel und die Länge des Spraykegels. Durch eine entsprechende Ausgestaltung der Geometrie des Düsenaustrittes kann somit der für den konkreten Anwendungsfall gewünschte Spraykegel der Düse erzeugt werden.

Zusätzlich bestimmt die Anordnung der zuleitenden Kanäle die Entstehung einer Rotationsbewegung in der Drallkammer und damit die Ausprägung des Spraywinkels.

Vorzugsweise ist der Strömungsquerschnitt des Anschlusskanals der Reduktionsmitteleinspritzdüse größer oder gleich dem Strömungsquerschnitt einer dem Anschlusskanal stromab folgenden Diffusorkammer.

Bevorzugt ist stromauf der Drallkammer eine Diffusorkammer angeordnet, wobei der Strömungsquerschnitt am Austritt der Diffusorkammer größer oder gleich dem Strömungsquerschnitt am Eintritt der Drallkammer ist.

Bevorzugt ist der Strömungsquerschnitt am Austritt der Drallkammer größer oder gleich dem Strömungsquerschnitt des Düsenaustrittes.

Dementsprechend ist die Düse bevorzugt derart ausgebildet, dass sich der Strömungsquerschnitt ausgehend vom Anschlusskanal der Düse bis hin zum Düsenaustritt entlang der einzelnen den Strömungskanal innerhalb der Düse bildenden Abschnitte verkleinert, sodass die Strömung beschleunigt wird. Durch die Beschleunigung der Strömung wird das Geschwindigkeitsprofil der Strömung über dem Strömungsquerschnitt gleichmäßiger. Die einzelnen Übergänge der Strömungskanäle und Kammern innerhalb der Düse sind dabei vorzugsweise derart ausgebildet, dass Toträume vermieden werden.

Vorzugsweise ist der Düsenkörper von einem Kühlkörper aufgenommen, insbesondere kann zwischen dem Düsenkörper und dem Kühlkörper ein Luftspalt ausgebildet sein.

In dem Fall, dass zwischen dem Düsenkörper und dem Kühlkörper ein Luftspalt ausgebildet ist, dient dieser Luftspalt als Luftspaltisolierung. Alternativ kann der Kühlkörper den Düsenkörper ohne Luftspalt aufnehmen. In diesem Fall erfolgt eine Wärmeleitung vom Düsenkörper in den Kühlkörper.

Bevorzugt ist der Düsenkörper von einem Kühlkörper aufgenommen, wobei der Kühlkörper zumindest einen Zulaufanschluss und zumindest einen Ablaufanschluss für ein Kühlmittel aufweist, über welche der Kühlkörper mit einem Kühlmittelkreislauf verbindbar ist.

Die Reduktionsmitteleinspritzdüse dient zur Einspritzung eines Reduktionsmittels in den Abgasstrom eines Verbrennungsmotors zur selektiven katalytischen Reduktion. Derartige Verbrennungsmotoren verfügen üblicherweise über einen Kühlkreislauf, mit dem in diesem Fall der Kühlkörper über den Zulaufanschluss und den Ablaufanschluss für ein Kühlmittel verbunden werden kann.

Vorzugsweise ist der Düsenkörper von einem Kühlkörper aufgenommen, wobei der Kühlkörper an seiner Außenseite einen Flansch aufweist, mittels dessen eine insbesondere gasdichte Montage an einem Abgaskanal eines Verbrennungsmotors erfolgen kann.

Dieser Flansch dient somit der gasdichten Montage von Reduktionsmitteleinspritzdüse und dem die Düse aufnehmenden Kühlkörper an einem Abgaskanal.

Bevorzugt weist der Düsenkörper eine Fixierfläche auf, über die Wärmeenergie aus einem Abgasstrom eines Verbrennungsmotors in den Düsenkörper einleitbar ist.

Besonders vorteilhaft bei dem Reduktionsmitteldosiersystem zur Einspritzung eines Reduktionsmittels in den Abgasstrom eines Verbrennungsmotors zur selektiven katalytischen Reduktion mit zumindest einer Dosierpumpe, mittels derer Reduktionsmittel aus einem Reduktionsmitteltank über eine Saugleitung aus dem Tank angesaugt, über zumindest eine Druckleitung gefördert und über zumindest eine Düse in den Abgasstrom des Verbrennungsmotors eingeleitet wird, ist es, dass die zumindest eine Düse durch eine erfindungsgemäße Reduktionsmitteleinspritzdüse gebildet ist.

Bevorzugt handelt es sich bei der Dosierpumpe um eine Kolbenpumpe. Vorzugsweise ist die Druckleitung zwischen der Dosierpumpe und der Reduktionsmitteleinspritzdüse durch eine druckstabile Leitung gebildet.

Ferner kann das Reduktionsmitteldosiersystem ein Steuergerät aufweisen oder mit einem Steuergerät verbunden sein, mittels dessen die Dosierpumpe angesteuert wird, insbesondere in einem geschlossenen Regelkreis in Abhängigkeit von Betriebsparametern wie beispielsweise Abgasmassenstrom und/oder Abgastemperatur geregelt wird. Mittels des Steuergerätes kann insbesondere die Dosierpumpe angesteuert werden.

Ein Ausführungsbeispiel der Erfindung ist in den Figuren dargestellt und wird nachfolgend näher erläutert. Es zeigen:
- Fig. 1: Eine schematische Darstellung eines Reduktionsmitteldosiersystems;
- Fig. 2a: die ideale Druckimpulsfolge ausgehend von einer Kolbendosierpumpe stromab;
- Fig. 2b: den tatsächlichen Verlauf der Druckimpulsfolge ausgehend von einer Kolbendosierpumpe stromab;
- Fig. 3: einen Schnitt der Düse bestehend aus dem inneren Düsenkörper und dem äußeren Düsenkörper;
- Fig. 4: den inneren Düsenkörper;
- Fig. 5: einen Schnitt der Düse bestehend aus dem inneren Düsenkörper und dem äußeren Düsenkörper;
- Fig. 6: eine Simulation der Strömung im Düsenkörper im Bereich des Düsenaustritts;
- Fig. 7a: einen Schnitt des Kühlkörpers zur Kühlung der Düse;
- Fig. 7b: einen Schnitt der Düse;
- Fig. 8: einen Schnitt des Kühlkörpers mit der darin aufgenommenen Düse in der Einbausituation;
- Fig. 9: physikalische Effekte der Austrocknung.

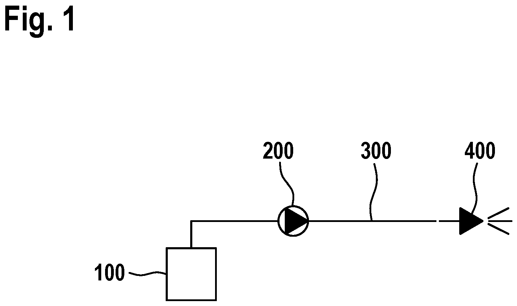

Fig. 1 zeigt eine schematische Darstellung eines Reduktionsmitteldosiersystems, bei dem aus einem Tank 100 mittels einer Dosierpumpe 200 über eine druckstabile Leitung 300 das Reduktionsmittel zu der Reduktionsmitteleinspritzdüse 400 gefördert wird. Die druckstabile Leitung 300 ist mit der Düse 400 verbunden. Die Düse 400 kann in einem Fahrzeug an der Abgasanlage des Fahrzeugs angeschlossen werden. Die Reduktionsmitteleinspritzdüse 400 dient der Einspritzung des Reduktionsmittels in den Abgasstrom eines Verbrennungsmotors zur selektiven katalytischen Reduktion.

Bei der Dosierpumpe 200 handelt es sich in dem dargestellten Ausführungsbeispiel um eine Kolbendosierpumpe, welche die angeforderte Masse aus dem Tank 100 ansaugt und gepulst in die Zuführungsleitung 300 zur Düse 400 abgibt. Dabei baut sich in der Zuführungsleitung 300 zur Düse 400 ein Druckimpuls auf, der sich bis zum Düsenaustritt ausbreitet. Dieser Druckimpuls sorgt am Düsenaustritt für die Länge des Sprayimpulses. Um den erzeugten Druckimpuls (Masse pro Kolbenhub der Dosierpumpe 200) nicht zu schwächen oder zu reduzieren, ist es notwendig, alle Toträume in den Anbindungs- und Verbindungsstellen ebenso wie scharfkantige oder hinterschnittene Übergänge zu eliminieren, so dass der Druckimpuls möglichst ungebremst bis zum Düsenaustritt gelangen kann.

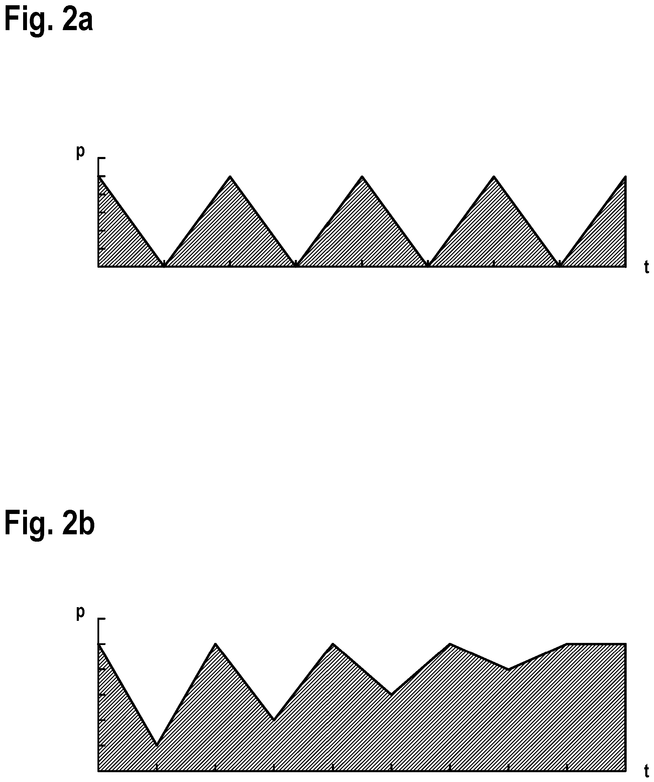

Fig. 2 zeigt eine Gegenüberstellung der idealen Druckimpulsfolge (Fig. 2a) ausgehend von einer Kolbendosierpumpe stromab sowie den tatsächlichen Verlauf der Druckimpulsfolge (Fig. 2b) ausgehend von einer Kolbendosierpumpe stromab bis zur Düse 400. Dargestellt ist die ideale Druckimpulsfolge p (Fig. 2a) bzw. die reale Druckimpulsfolge p (Fig. 2b) über der Zeit t entsprechend der Lauflänge ausgehend vom Pumpenausgang entlang der Zuführungsleitung 300 zur Düse 400.

Die Dosierung erfolgt über eine durch ein Steuergerät angesteuerte Kolbendosierpumpe 200, welche die über ein Steuergerät angeforderte Masse an Reduktionsmittel aus dem Tank 100 diskontinuierlich ansaugt und gepulst durch die Kolbenhübe in die druckstabile Zuführungsleitung 300 zur Düse 400 abgibt.

Dabei baut sich in der Zuführungsleitung 300 zur Düse 400 ein Druckimpuls auf, der sich bis zum Düsenaustritt fortsetzt. Durch diverse Einflussfaktoren wird dieser Druckimpuls über die Strecke bis zur Düse gestaucht. Es entsteht ein Druckpolster (Staudruck). Dieses Druckpolster sorgt am Düsenaustritt für die Länge des Sprayimpulses.

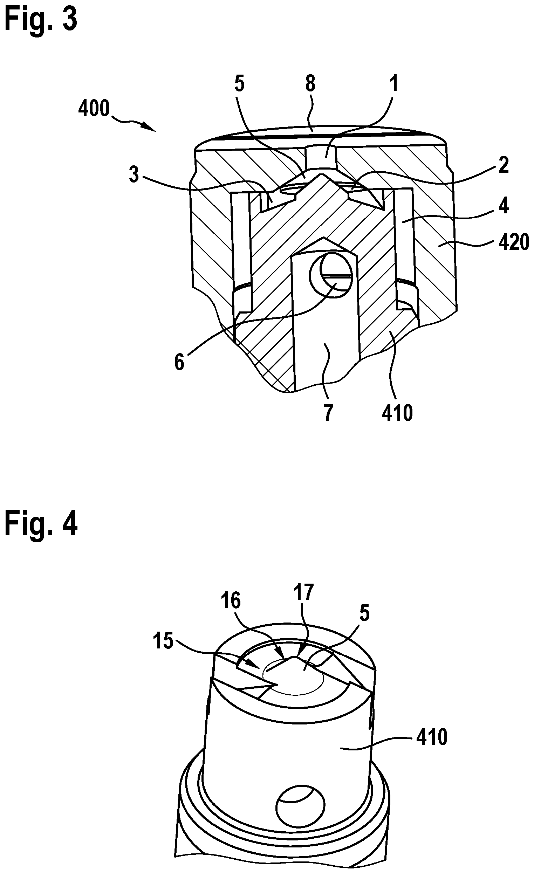

Der Druckimpuls aus der druckstabilen Zuführungsleitung 300 wird von der Düse 400 aufgenommen, deren Aufbau nachfolgend anhand der Figuren 3 bis 5 erläutert wird.

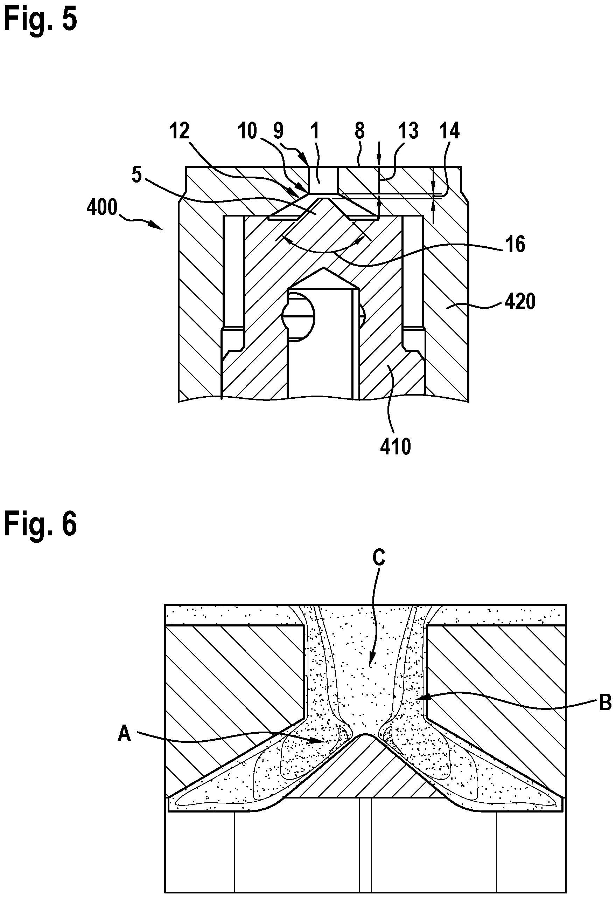

Figur 3 zeigt einen Schnitt der Düse 400 bestehend aus dem inneren Düsenkörper 410 und dem äußeren Düsenkörper 420. Die Oberflächen des inneren Düsenkörpers 410 und des äußeren Düsenkörpers 420 sind derart ausgestaltet, dass zwischen dem inneren Düsenkörper 410 und dem äußeren Düsenkörper 420 Kammern und Strömungskanäle ausgebildet werden. Fig. 4 zeigt eine perspektivische Ansicht des inneren Düsenkörpers 410 und Figur 5 zeigt einen weiteren Schnitt der Düse 400 bestehend aus dem inneren Düsenkörper 410 und dem äußeren Düsenkörper 420.

Das Dosiermedium wird zentral über die Zuführungsleitung 300 in den Anschlusskanal 7 der Reduktionsmitteleinspritzdüse 400 eingeleitet und mittels zweier Umleitkanäle 6 in eine Diffusorkammer 4 umgelenkt. Der Anschlusskanal 7 und die Umleitkanäle 6 sind in den inneren Düsenkörper 410 eingebracht. Die Diffusorkammer 4 ist zwischen dem inneren Düsenkörper 410 und dem äußeren Düsenkörper 420 ausgebildet. Die Diffusorkammer 4 dient dem Ausgleich des Druckimpulses.

Ausgehend von der Diffusorkammer 4 sind zwei um ca. 80° auf dem Umfang relativ zu den Umleitkanälen 6 versetzte Einleitkanäle 3 angeordnet, die in die Drallkammer 2 münden. Das bedeutet, dass das Dosiermedium über diese Einleitkanäle 3 von der Diffusorkammer 4 in die Drallkammer 2 geleitet wird. Der Umfangsversatz der Einleitkanäle 3 gegenüber die Umleitkanälen 6 hat die Funktion, das Dosiermedium in Bewegung zu halten, sodass sich kein stillstehendes Medium ergibt mit einer eventuellen partiellen Überhitzung des Reduktionsmittels und es als Folge daraus zu keiner vorzeitigen Stoffumwandlung kommt.

Die in die Drallkammer 2 mündenden Einleitkanäle 3 sind derart ausgestaltet, dass sie tangential an der kegelförmigen Geometrie der Drallkammer 2 ansetzen. Das heißt, dass die Einleitkanäle 3 tangential in die Drallkammer 2 münden. Dadurch, dass die Einleitkanäle 3 tangential in die kegelförmige Geometrie der Drallkammer 2 münden, bewegt sich das eingeleitete Dosiermedium in einer Kreisbahn zum Düsenaustritt 1, wobei sich der Strömungsquerschnitt der Drallkammer 2 zum Düsenaustritt 1 stetig verjüngt.

Die Drallkammer 2 weist eine kegelförmige Geometrie auf. Diese wird gebildet von einem zweiten Kegel 5, welcher die untere Struktur der Drallkammer 2 abbildet und die Drallkammer 2 zur Spitze stetig verjüngt. Diese Anordnung lässt zudem stetig den Staudruck ansteigen.

Die Drallkammer 2 ist zwischen einer Kegelspitze 5 am Boden der Drallkammer 2 und einer kegelförmigen Ausnehmung an der Oberseite der Drallkammer 2 ausgebildet. Die kegelförmige Ausnehmung an der Oberseite der Drallkammer 2 kann auch als Trichter bezeichnet werden, der in die Austrittsbohrung zum Düsenaustritt 1 mündet.

Ein geschmeidiger Übergangsradius 15 zwischen Boden und Kegel 5 sorgt dafür, dass das eingeleitete Dosiermedium nicht vorzeitig gebremst wird, so dass die Energie verloren geht. Der innere Kegel 5 am Boden der Drallkammer 2 mit dem Kegelwinkel 16 und dem Kegelende 17, die einerseits abgerundet oder alternativ abgeflacht gestaltet werden kann, hat zum einen die Funktion, das Dosiermedium gegenüber der Drallkammer-Außenkontur rotatorisch zu lenken und dabei die Geschwindigkeit und damit den Druck stetig zu erhöhen und an dem Kegelende 17 abzureißen.

Der Effekt ist in diesem Bereich ein turbulentes Verhalten des Dosiermediums. Dieser Effekt führt in der weiteren Folge dazu, dass sich das verdichtete Dosiermedium in den Randzonen (A) und (B) der Austrittsbohrung des Düsenaustritts 1 der Düse 400 weniger energiereduzierend verhält und durch diese Turbulenz in der Durchtrittzone (C) einen Vollkegelstrahl ausbildet, wie dies in der in Fig. 6 dargestellten Simulation der Strömung im Düsenkörper im Bereich des Düsenaustritts erkennbar ist.

Der scharfkantige Übergang der Austrittsbohrung 9 zur Außenfläche 8 hat die Funktion, die Spraybreite gering zu halten, wie dies in der Schnittdarstellung gemäß Fig. 5 erkennbar ist. Die Länge der Austrittsbohrung 13 und damit die Medienführung beeinflusst den Spraywinkel, da durch die Länge Energie entzogen wird.

Der Bohrungsdurchmesser ist so gewählt, dass er einen Gegendruck im System hält, aber in Abstimmung zur Pumpe 200 und Leitungslänge den Einzelhub energetisch streckt, um im Dosiermedium und dessen Viskosität einen langen Dosierhub zu erhalten.

Die Auslegung des Austrittsdurchmessers des Düsenaustritts 1 dient somit der Funktion, den akzeptablen Spraydruck zu strecken, da ein hoher Druck in einer feinen Tropfenverteilung resultiert. Durch die seitliche Anordnung der Einleitkanäle 3 in die Drallkammer 2 und das Umlenken des Dosiermediums mit der Materialeigenschaft der Viskosität und die damit einhergehenden Querschnitte und Richtungsänderungen entstehen Adhäsionskräfte, die das Dosiermedium nach Beendigung des Pumpenhubs stoppen, d.h. ein schnelles Abflachen der Hubkurve bewirken.

Zudem verhindern die Adhäsionskräfte und die vorher genannten Geometrien, dass durch das zur Pumpe 200 geschlossene System Dosiermedium zur Düse 400 nachläuft bzw. ausläuft. Dies wird unterstützt von der Position und Lage des Kegels 5 zum Trichter 12 und dem daraus resultierenden Ringspalt, der sich durch die Einbauposition 14 einstellt. Der Kantenradius 10 zwischen Austrittsbohrung zum Düsenaustritt 1 und dem Trichter 12 hat ebenfalls die Funktion, das ausströmende Dosiermedium in Rotation zu halten, so dass sich die Randzone (B) nicht zu stark nach innen ausbildet und die austretende Strömung bremst.

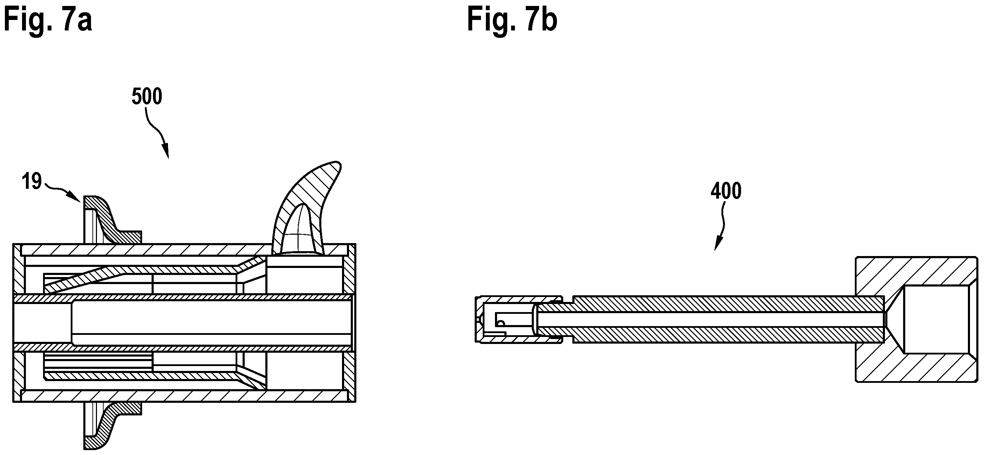

In der Einbausituation ist die Düse 400 von einem Kühlkörper 500 umgeben, um einen Schutz vor einer Überhitzung durch das heiße Abgas zu verhindern. Fig. 7a zeigt einen Schnitt des Kühlkörpers 500 zur Kühlung der Düse 400, deren Schnitt in Fig. 7b dargestellt ist. In der Einbausituation ist die Düse 400 vom Kühlkörper 500 umgeben.

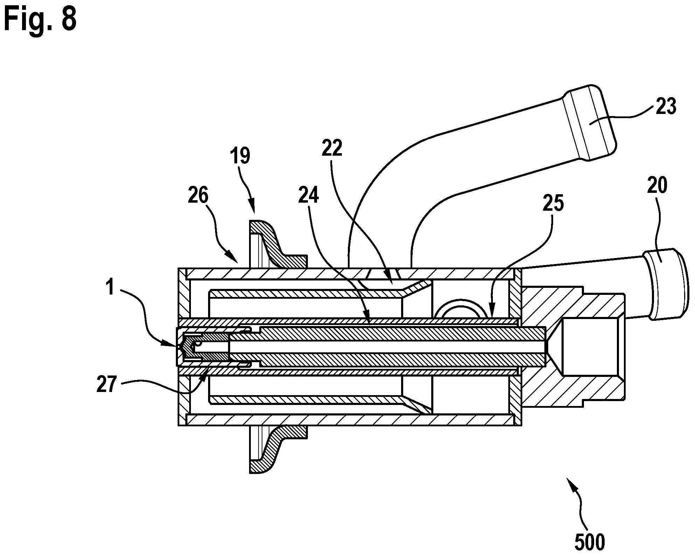

Fig. 8 zeigt den Schnitt des Kühlkörpers 500 mit der darin aufgenommenen Düse 400 in der Einbausituation. Zwischen der Düse 400 und der Innenwandung 25 des Kühlkörpers 500 ist ein Luftspalt 24 ausgebildet. Zur Einbindung des Kühlkörpers 500 in einen Kühlmittelkreislauf eines Fahrzeuges weist der Kühlkörper 500 ein Anschlussrohr 20 zur Einspeisung von Kühlmittel und ein Ausleitrohr 23 zur Ausleitung des Kühlmittels auf.

Der Kühlkörper 500 umgibt die Düse 400 und fixiert diese mit einer Anbindungsstelle in Form eines Flansches 19 zum Abgassystem. Diese Anbindungsstelle ist mittels einer Dichtung und einer Klemmfixierung zur Umwelt gasdicht gesichert. Über das Abgassystem werden hohe Temperaturen über die Anbindungsstelle durch Konvektionsenergie auf den Kühlkörper 500 übertragen. Zudem wird der Kühlkörper 500 durch Strahlungs-Energie aufgeheizt.

Um die beiden Wärmeeinträge zu kompensieren, wird der Kühlkörper 500 mittels Kühlflüssigkeit aus dem Fahrzeug-Kühlkreislauf temperiert. Dabei wird die Kühlflüssigkeit in den innenliegenden Bereich des Kühlkörpers 500 über das Anschlussrohr 20 eingeleitet, von dort in Richtung Düsenaustritt 1 geleitet und durch das Umlenkblech 22 nach außen in die heiße Zone umgeleitet. Von dort wird die Kühlflüssigkeit nach oben zum Ausleitrohr 23 geleitet und wieder dem Kühlkreislauf zugeführt. Der Luftspalt 24 zwischen der Düse 400 und der Innenwandung 25 des Kühlkörpers 500 hat die Funktion einer Luftspaltisolierung.

Die gewählte Geometrie der Strömungskanäle in der Düse 400 dient ferner einem richtungsorientierten Austrocknen und Kristallisieren, wenn der Dosiervorgang abgeschlossen ist und das Dosiersystem nicht mehr dosiert, der Pumpenhub also eingestellt ist. In diesem Fall steht das geförderte Dosiermedium noch in der gesamten benetzten Leitungsführung. Die vom Abgasstrang eindringende Wärme vaporisiert die Flüssigkeit, da es sich um ein offenes System handelt und der Feuchteanteil durch den Düsenaustritt 1 entweichen kann.

Das üblicherweise eingesetzte Reduktionsmittel in Form einer wässrigen Harnstofflösung hat die chemische Eigenschaft, bei Raumtemperatur sowie bei höheren Temperaturen den Wasseranteil durch Verdampfung zu verlieren und als Folge daraus eine luftdurchlässige kristalline Struktur zu bilden. Hierbei verbleibt der Ammoniakanteil in der Atmosphäre der Leitung. Bei höheren Temperaturen tritt dieser Effekt deutlich schneller ein. Bei Temperaturen von über 180°C kommt es darüber hinaus zu Spaltprodukten, die sich ablagern und sich nicht mehr durch Wasser und/oder das üblicherweise eingesetzte Reduktionsmittel lösen lassen.

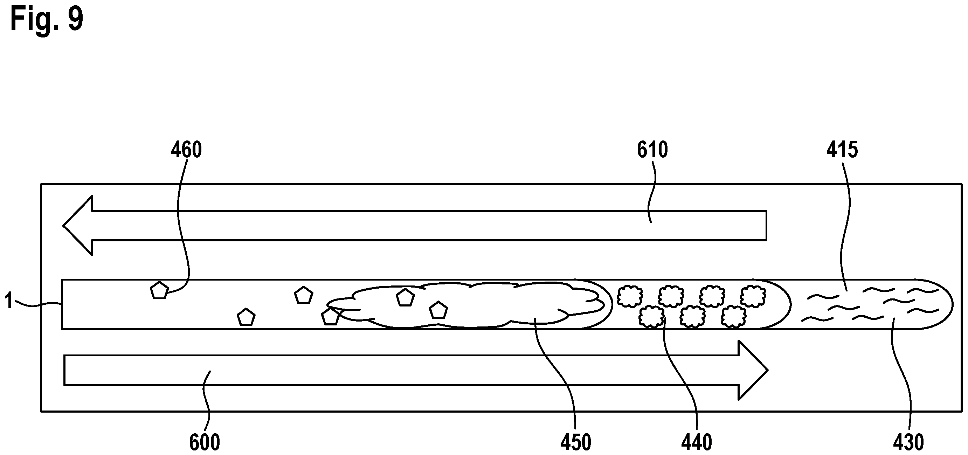

Um einer Verblockung der Düse 400 durch kristalline Ablagerungen vorzubeugen, erfolgt ein Verblockungsschutz durch eine gezielte Austrocknung. Das Schema dieser Vorgehensweise und der physikalischen Effekte ist in Fig. 9 dargestellt. Der Pfeil 600 charakterisiert die Eindringrichtung der Temperatur gegen die Strömungsrichtung des Dosiermediums im Strömungskanal 415 zum Düsenaustritt 1 der Düse 400. Der Pfeil 610 charakterisiert die Austriebsrichtung des durch eine Verdampfung des Wasseranteils des Reduktionsmittels gebildeten Wasserdampfes. In dem Strömungskanal 415 der Düse 400 bilden sich aufgrund des Temperatureinflusses in Richtung auf den Düsenaustritt von ineinander übergehenden Abschnitten 430, 440 ,450, 460 von flüssigem Dosiermedium im Abschnitt 430, stromab gefolgt von einem Abschnitt 440 mit einer ersten Wasserdampfbildung, stromab gefolgt von einem Abschnitt 450 mit Wasserdampf durch den in diesem Abschnitt 450 vollständig verdampftem Wasseranteil, stromab gefolgt von einem Abschnitt 460 mit der Bildung von Harnstoffkristallen in dem Strömungskanal 415 der Düse 400. Diese werden durch den Verdampfungsdruck ausgeschoben.

Die Versorgungsleitung 300 von der Pumpe 200 zur Düse 400 hat einen größeren oder gleichen Strömungsquerschnitt als der Querschnitt zum Düseneintritt 7. Ist der Versorgungsdurchmesser der Leitung 300 größer, reduziert die Düse 400 diesen Versorgungsdurchmesser im dargestellten Ausführungsbeispiel auf 2mm. Die Strömungsquerschnitte der Zuführungskanäle 6 und der Diffusorkammer 4 sind davon ausgehend weiter reduziert. Der Drallkammer-Durchtritt ist mit D=1,5 mm dimensioniert und der Düsenaustritt 1 hat einen Durchmesser von 0,7mm.

Diese kontinuierliche Reduzierung des Strömungsquerschnittes führt zu einer Isolierung des flüssigen Dosiermediums. Im Bereich der Austrocknung findet man wasserlösliche Kristalle sowie eine gesättigte Atmosphäre aus Wasserdampf bzw. Ammoniak sowie Luft. Der Austausch dieser Atmosphäre und damit die weitere Austrocknung kann nur über die Düsenöffnung 1 mit einem Durchmesser von 0,7mm erfolgen, die zusätzlich mit wasserlöslichen Kristallen verschlossen bzw. als Barriere geschützt ist.

In dem Fall, dass noch höhere Abgastemperaturen auf die Düse einwirken, kann dies zu einer Umwandlung des Harnstoffes in Spaltprodukte führen.

Für diesen Fall wird ein Überhitzungsschutz benötigt, der die hohen Temperaturen aufnimmt und abführt, so dass es im Dosiersystem und der Düse nicht zu Ablagerungen in Form von Spaltprodukten kommt.

Der Kühlkörper 500 nimmt die Strahlungs- und Konvektionshitze auf und leitet sie über eine Kühlflüssigkeit (Wasser) von der Düse 400 ab. Dabei leitet der Verbindungsflansch 19 die Konvektionswärme sowie die anfallende Strahlungswärme in den Außenmantel 26, der von innen mit einer Kühlflüssigkeit benetzt ist, ab. Eine Umlenkwand lenkt die eingeleitete Strömung erst über die Innenrohrseite 25 zum Düsenaustritt 1 und über die heiße Seite zurück über das Anschlussrohr 23 in das Kühlleitungssystem. Dabei hilft das Innenrohr 25 des Kühlkörpers, welches zusammen mit dem Düsenkörper eine aktive Luftspaltkühlung 24 darstellt und die Überhitzung nicht an die Düse 400 gelangen lässt.

Die Fixierfläche 27 zwischen Düsenspitze und Kühlkörper 500 ist so positioniert, dass sie die Funktion der Fixierung und Ausrichtung übernimmt. Des Weiteren wurde sie als lose Verbindung ausgelegt, so dass der thermische Längenausgleich erfolgen kann und es nicht zu Bauteilbeschädigungen kommt. Diese gleitend geführte Fixierfläche 27, an der es zu schlechteren Wärmeübergängen kommt als bei festen Verbindungen dient als Überhitzungsschutz und wurde in den Bereich der Kühlflüssigkeitsumlenkung gelegt, so dass dort die durch den Muffler einwirkende Wärme auf den Düsenkörper starten kann.

Somit starten dort die physikalischen und chemischen Eigenschaften der Austrocknung des üblicherweise eingesetzten Reduktionsmittels mit 32% Harnstofflösung und 68% Wasser (Startaustrocknungspunkt). Unter Temperatureinfluss nimmt das anteilige Wasser beim Aggregatzustandswechsel zu Wasserdampf ein deutlich größeres Volumen als in flüssiger Form ein, etwa das tausendfache Volumen.

Infolgedessen kommt es zu einer kontinuierlichen Druckerhöhung im Düsensystem, der nur in einer Richtung auf den Düsenaustritt abgebaut werden kann.

Da die Austrocknungsrichtung der Düse von der Düsenspitze 1 Richtung Düseneingang 7 erfolgt, wird mit zunehmender Strecke zuerst das Wasser aus dem Reduktionsmittel verdampfen und die Ammoniakatmosphäre sowie bereits kleinkristallisierte Partikel (Harnstoffkristalle) aus der Düse austragen.

Dieser Effekt schreitet so lange voran, bis ein Temperatur- und Druckausgleich vorliegt und die Flüssigkeit nicht mehr verdampft. Die Atmosphäre innerhalb der Leitung ist gesättigt und es entstehen kleine kristalline Strukturen aus der Ablagerung der Bestandteile in der gesättigten Atmosphäre, die sich in der Leitung bis zur Düse bilden können.

Startet die Kolbenpumpe erneut, fördert sie Flüssigkeiten in die druckstabile Leitung. Kristalline Strukturen innerhalb der Leitung und der Düse lösen sich in der Flüssigkeit schnell auf und werden mit durch die Düsenspitze in den Muffler ausgetragen.

## Patentansprüche

1. Reduktionsmitteleinspritzdüse (400) zur Einspritzung eines Reduktionsmittels in den Abgasstrom eines Verbrennungsmotors zur selektiven katalytischen Reduktion, aufweisend einen Düsenkörper, innerhalb dessen Strömungskanäle (6, 7) ausgebildet sind, durch die das zur Reduktionsmitteleinspritzdüse geförderte Reduktionsmittel von einem Anschlusskanal der Reduktionsmitteleinspritzdüse zu einem Düsenaustritt (1) geleitet wird, **dadurch gekennzeichnet, dass** stromauf des Düsenaustrittes (1) eine sich in Richtung auf den Düsenaustritt (1) verjüngende Drallkammer (2) ausgebildet ist.

2. Reduktionsmitteleinspritzdüse (400) nach Anspruch 1, **dadurch gekennzeichnet, dass** die Drallkammer (2) zwischen einer Kegelspitze (5) am Boden der Drallkammer (2) und einer kegelförmigen Ausnehmung an der Oberseite der Drallkammer (2) ausgebildet ist.

3. Reduktionsmitteleinspritzdüse (400) nach Anspruch 1 oder 2, **dadurch gekennzeichnet, dass** die Reduktionsmitteleinspritzdüse (400) zur Einleitung des Reduktionsmittels in die Drallkammer (2) zumindest einen, insbesondere zwei über dem Umfang der Drallkammer (2) versetzt angeordnete, tangential in die Drallkammer (2) mündende/n Einleitkanal/Einleitkanäle (3) aufweist.

4. Reduktionsmitteleinspritzdüse (400) nach einem der vorherigen Ansprüche, **dadurch gekennzeichnet, dass** stromauf der Drallkammer (2) eine Diffusorkammer (4) angeordnet ist, die mittelbar oder unmittelbar mit dem Anschlusskanal (7) der Reduktionsmitteleinspritzdüse (400) verbunden ist, insbesondere dass ausgehend von dem Anschlusskanal (7) der Reduktionsmitteleinspritzdüse (400) ein oder mehrere Umleitkanäle (6) angeordnet sind, die in die Diffusorkammer (4) münden.

5. Reduktionsmitteleinspritzdüse (400) nach einem der vorherigen Ansprüche, **dadurch gekennzeichnet, dass** stromauf der Drallkammer (2) eine Diffusorkammer (4) angeordnet ist, wobei die Diffusorkammer (4) durch einen rotationssymmetrischen Ringspalt zwischen einem inneren Düsenkörper (410) und einem äußeren Düsenkörper (420) ausgebildet ist.

6. Reduktionsmitteleinspritzdüse (400) nach einem der vorherigen Ansprüche, **dadurch gekennzeichnet, dass** stromauf der Drallkammer (2) eine Diffusorkammer (4) angeordnet ist, wobei die Drallkammer (2) strömungstechnisch über zumindest einen Einleitkanal (3) mit der Diffusorkammer (4) verbunden ist, insbesondere über einen oder mehrere tangential in die Drallkammer (2) mündende/n Einleitkanal/Einleitkanäle (3).

7. Reduktionsmitteleinspritzdüse (400) nach einem der vorherigen Ansprüche, **dadurch gekennzeichnet, dass** die Drallkammer (2) in den Düsenaustritt (1) mündet, wobei der Düsenaustritt (1) durch eine zylindrische Bohrung gebildet ist.

8. Reduktionsmitteleinspritzdüse (400) nach einem der vorherigen Ansprüche, **dadurch gekennzeichnet, dass** der Strömungsquerschnitt des Anschlusskanals (7) der Reduktionsmitteleinspritzdüse (400) größer oder gleich dem Strömungsquerschnitt einer dem Anschlusskanal (7) stromab folgenden Diffusorkammer (4) ist.

9. Reduktionsmitteleinspritzdüse (400) nach einem der vorherigen Ansprüche, **dadurch gekennzeichnet, dass** stromauf der Drallkammer (2) eine Diffusorkammer (4) angeordnet ist, wobei der Strömungsquerschnitt am Austritt der Diffusorkammer (4) größer oder gleich dem Strömungsquerschnitt am Eintritt der Drallkammer (2) ist.

10. Reduktionsmitteleinspritzdüse (400) nach einem der vorherigen Ansprüche, **dadurch gekennzeichnet, dass** der Strömungsquerschnitt am Austritt der Drallkammer (2) größer oder gleich dem Strömungsquerschnitt des Düsenaustrittes (1) ist.

11. Reduktionsmitteleinspritzdüse (400) nach einem der vorherigen Ansprüche, **dadurch gekennzeichnet, dass** der Düsenkörper von einem Kühlkörper (500) aufgenommen ist, insbesondere dass zwischen dem Düsenkörper und dem Kühlkörper (500) ein Luftspalt (24) ausgebildet ist.

12. Reduktionsmitteleinspritzdüse (400) nach einem der vorherigen Ansprüche, **dadurch gekennzeichnet, dass** der Düsenkörper von einem Kühlkörper (500) aufgenommen ist, wobei der Kühlkörper (500) zumindest einen Zulaufanschluss (20) und zumindest einen Ablaufanschluss (23) für ein Kühlmittel aufweist, über welche der Kühlkörper (500) mit einem Kühlmittelkreislauf verbindbar ist.

13. Reduktionsmitteleinspritzdüse (400) nach einem der vorherigen Ansprüche, **dadurch gekennzeichnet, dass** der Düsenkörper von einem Kühlkörper (500) aufgenommen ist, wobei der Kühlkörper (500) an seiner Außenseite einen Flansch (19) aufweist, mittels dessen eine insbesondere gasdichte Montage an einem Abgaskanal eines Verbrennungsmotors erfolgen kann.

14. Reduktionsmitteleinspritzdüse (400) nach einem der vorherigen Ansprüche, **dadurch gekennzeichnet, dass** der Düsenkörper eine Fixierfläche (27) aufweist, über die Wärmeenergie aus einem Abgasstrom eines Verbrennungsmotors in den Düsenkörper einleitbar ist.

15. Reduktionsmitteldosiersystem zur Einspritzung eines Reduktionsmittels in den Abgasstrom eines Verbrennungsmotors zur selektiven katalytischen Reduktion, mit zumindest einer Dosierpumpe (200), mittels derer Reduktionsmittel aus einem Reduktionsmitteltank (100) über eine Saugleitung aus dem Tank (100) angesaugt, über zumindest eine Druckleitung (300) gefördert und über zumindest eine Düse (400) in den Abgasstrom des Verbrennungsmotors eingeleitet wird, **dadurch gekennzeichnet, dass** die zumindest eine Düse (400) durch eine Reduktionsmitteleinspritzdüse (400) nach einem der vorherigen Ansprüche gebildet ist.
